**Europäisches Patentamt**

**European Patent Office**

**Office européen des brevets**

(11) Veröffentlichungsnummer: **0 204 995**
**A2**

(12) **EUROPÄISCHE PATENTANMELDUNG**

(21) Anmeldenummer: **86106732.0**

(22) Anmeldetag: **16.05.86**

(51) Int. Cl.⁴: **F 24 J 3/00**
**C 09 K 5/04, F 25 B 15/02**

(30) Priorität: **07.06.85 DE 3520565**

(43) Veröffentlichungstag der Anmeldung:
**17.12.86** Patentblatt **86/51**

(84) Benannte Vertragsstaaten:
**AT BE CH FR GB IT LI LU NL SE**

(71) Anmelder: **Fried. Krupp Gesellschaft mit beschränkter Haftung**
**Altendorfer Strasse 103**
**D-4300 Essen 1(DE)**

(72) Erfinder: **Gockel, Karl-Heinz**
**Alfredstrasse 254**
**D-4300 Essen 1(DE)**

(72) Erfinder: **Mostofizadeh-Ghalamfarsa, Dr.Chahpar**
**Endemannhöhe 1A**
**D-4300 Essen 15(DE)**

(54) **Verfahren und Vorrichtung zur Umwandlung von Niedertemperaturwärme in nutzbare Wärme.**

(57) Zur Beseitigung der bei bisher bekannten Wärmetransformatoren gegebenen Nachteile, insbesondere der aufwendigen Bauweise, zu hoher Unter- und Überdrücke, einem begrenzten Nutztemperaturbereich, einem nicht ausreichenden Wärmeverhältnis und einem störanfälligen Betrieb, wird vorgeschlagen, daß in einem geschlossenen Kreislauf die aus einem Absorber (A1) kommende reiche Lösung (r5) zuerst den aus einem Verdampfer (H2) stammenden Arbeitsmitteldampf (d2) erhitzt und anschließend eine einem Austreiber (H1) entzogene arme Lösung (a3) erwärmt und schließlich das aus einem Kondensator (K1) abgeführte Arbeitsmittelkondensat (d2) erwärmt, bevor dies dem Verdampfer (H2) zugeleitet wird, und daß der überhitzte, aus dem Verdampfer stammende Arbeitsmitteldampf (d3) und die erwärmte arme Lösung (a2) dem Absorber (A1) zugeführt werden, wo durch Absorption Nutzwärme frei wird. Ferner wird das flüssige Arbeitsmittel (k6) vom Verdampfer (H2) zum Austreiber (H1) zurückgeführt. Der im Austreiber (H1) erzeugte, überhitzte Arbeitsmitteldampf (d1) wird über einen Dampfsättiger (C1) dem Kondensator (K1) zugeführt.

FIG. 1

- 1 -

FRIED. KRUPP GESELLSCHAFT MIT BESCHRÄNKTER HAFTUNG
in Essen


Verfahren und Vorrichtung zur Umwandlung von Niedertemperaturwärme in nutzbare Wärme

Die Erfindung betrifft ein Verfahren und eine Vorrichtung
zur Umwandlung von Niedertemperaturwärme in nutzbare
Wärme unter Einsatz der im Prinzip nach dem Stand der
Technik bekannten Bauteile, wie Verdampfer, Absorber,
Kondensator und Austreiber gemäß den Oberbegriffen der
Ansprüche 1 und 6.

Die fortschreitende Erschöpfung der Energiequellen und
die steigenden Energiepreise führen dazu, neue Technologien für eine rationellere Energieverwendung zu entwickeln. Bei vielen industriellen Prozessen wird der
größte Teil der eingesetzten Energie als Abfallwärme
abgeführt, wie z. B. bei der Trocknung, Eindampfung und
Destillation. Dabei reicht die Temperatur der Abfallwärme meistens für eine direkte Nutzung nicht aus. Erst
nach Anhebung dieser Temperatur wird die Abfallwärme
in Nutzwärme umgewandelt und kann im Prozeß oder anderweitig verwendet werden. Bekanntlich läßt sich dieses
mit Hilfe eines Wärmetransformators verwirklichen,
der im wesentlichen aus einem Austreiber, einem Kondensator, einem Verdampfer und dem Absorber besteht.
Dem Austreiber und dem Verdampfer wird die Abfallwärme
zugeführt, während dem Absorber die Nutzwärme entzogen
und im Kondensator die nicht verwertbare Abwärme an
ein Kühlmedium abgegeben wird. Die insoweit nach dem
Stand der Technik bekannten Wärmetransformatoren haben
folgende Nachteile: Eine aufwendige Bauweise, zu große
Über- bzw. Unterdrücke, einen begrenzten Nutztemperaturbereich, ein nicht ausreichendes Wärmeverhältnis und einen störanfälligen Betrieb. Dies führt oftodazu995
daß eine Wärmerückgewinnung durch Wärmetransformation
nicht wirtschaftlich durchgeführt werden kann, vielfach
schon wegen der zu hohen Investitionskosten.

Aus der DE-OS 34 22 949 ist zudem eine Resorptions-
Wärmetransformatoranlage bekannt, die mit einem Zweistofflösungsmittel in zwei Lösungskreisläufen betrieben
wird, die durch einen dritten Wärmetauscher thermisch
gekoppelt sind.

Es ist Aufgabe der Erfindung, ein Verfahren und eine Vorrichtung anzugeben, bei denen die Effizienz des Wärmetransformators durch geeignete Verfahrensführung bzw.
Schaltung und damit dessen Betriebsweise verbessert ist.
Insbesondere soll ein kompakter Wärmetransformator durch
geeignete Anordnung der Bauteile und verbesserte Verfahrensführung der Stoffströme geschaffen werden.

Diese Aufgabe wird durch das im Patentanspruch 1 beschriebene Verfahren gelöst. Der wesentliche Erfindungsgedanke besteht darin, daß die aus dem Absorber kommende
reiche Lösung zuerst den aus einem Verdampfer stammenden
Arbeitsmitteldampf überhitzt, der in dieser Form dem
Absorber zugeführt wird. Ferner wird die reiche Lösung
zur Erwärmung der von dem Austreiber kommenden armen
Lösung verwendet; die erwärmte arme Lösung wird ebenfalls dem Absorber zugeführt, wo sie mit dem überhitzten Arbeitsmitteldampf vermischt und die bei der
folgenden Absorption entstehende Nutzwärme genutzt wird.
Schließlich soll die reiche Lösung auch noch zur Erwärmung des Arbeitsmittelkondensats aus dem Kondensator
verwendet werden, bevor dieses dem Verdampfer zugeführt wird.

Nach einer Weiterbildung der Erfindung wird ferner das
flüssige Arbeitsmittel vom Verdampfer zum Austreiber zurückgeführt. Das vorstehend beschriebene Verfahren ermöglicht eine wirtschaftliche Rückgewinnung von nutzbarer Wärme niedriger Temperatur.

Zum Abbau der Überhitzung des aus dem Austreiber entzogenen überhitzten Arbeitsmitteldampfes wird dieser über einen Dampfsättiger geleitet, bevor er dem Kondensator zugeführt wird. Vorteilhafterweise wird in dem genannten Dampfsättiger ein Teil des von dem Kondensator abgezogenen Kondensats versprüht, wodurch dieses unter Aufnahme der Überhitzungswärme verdampft.

Bevorzugt wird als Arbeitsmittel ein Gemisch aus Trifluorethanol und Tetraethylenglykoldimethyläther verwendet.

Zur Durchführung des erfindungsgemäßen Verfahrens verwendet man eine Vorrichtung nach Ansprüchen 6 bis 16. Insgesamt ermöglicht diese Vorrichtung es erstmals, die wesentlichen Bauteile des Wärmetransformators, nämlich den Austreiber, den Kondensator, den Verdampfer, den Absorber, sowie einen Dampfüberhitzer in einem einzigen Gehäuse unterzubringen, unter dem sich weitere Wärmeaustauscher zur Erwärmung des Arbeitsmittels und der armen Lösung befinden. Die beschriebene Anordnung besitzt eine kompakte Bauweise, die gleichermaßen den Fertigungs- und Konstruktionsaufwand im Vergleich zur bisher nach dem Stand der Technik bekannten "Splittbauweise" erheblich reduziert. Ferner werden die Wärmeverluste stark vermindert. Unter Verwendung des vorgenannten Arbeitsmittels läßt sich bei einer zugeführten Abfallwärme mit einer Temperatur von 80 bis 90 $^\circ$C eine Nutzwärmetemperatur bis 150 $^\circ$C erzielen. Dies bedeutet gegenüber dem Stand der Technik eine erhebliche Verbesserung des Einsatzbereiches, wenn man berücksichtigt, daß herkömmliche Wärmetransformatoren, die z.B. auf der Basis Wasser/Lithiumbromid oder Ammoniak/Wasser arbeiten, allenfalls Nutzwärmetemperaturen bis 130 $^\circ$C erreichen. Diese Grenzen sind bei Wasser/Lithiumbromid durch die zu kleine Entgasungsbreite und bei Ammoniak/Wasser durch unwirtschaftlich hohe Drücke von mehr als 40 bar gegeben.

Ein Ausführungsbeispiel der Erfindung ist in den Zeichnungen dargestellt und dient im folgenden zur weiteren Erläuterung der Erfindung. Es zeigen

Fig. 1        das Verfahrensschema zur Umwandlung von Niedertemperatur in Nutzwärme und

Fig. 2a bis d   eine Vorrichtung zur Durchführung des Verfahrens in kompakter Bauweise.

Zur besseren Orientierung sind in den Zeichnung die Stoffströme mit kleinen Buchstaben und die Vorrichtungsteile mit großen Buchstaben, jeweils in Verbindung mit Bezugszeichen, bezeichnet.

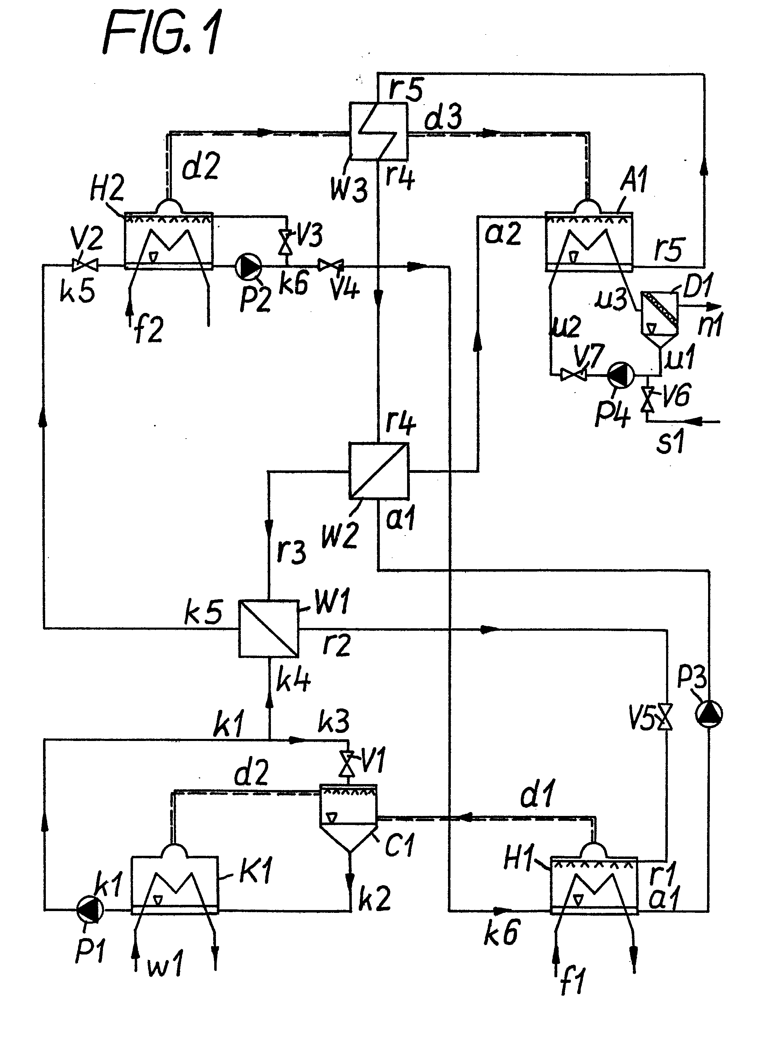

Die erfindungsgemäße Vorrichtung besteht im wesentlichen gemäß Fig. 1 aus einem Austreiber $H_1$, einem Absorber $A_1$, einem Kondensator $K_1$, einem Verdampfer $H_2$ sowie einem Dampfüberhitzer $W_3$, einem Lösungswärmetauscher $W_2$ und einem Vorwärmer $W_1$. Dazu befindet sich noch zwischen Austreiber $H_1$ und Kondensator $K_1$ ein Dampfsättiger $C_1$.

Nach Fig. 1 tritt die auf den niedrigeren Druck entspannte reiche Lösung $r_1$ in den Austreiber $H_1$ ein und wird auf horizontal angeordnete Rohre versprüht, durch die der Abfallwärmeträger, z.B. Abfalldampf $f_1$ strömt, der durch Wärmeabgabe, z.B. durch Kondensation, eine teilweise Verdampfung der reichen Lösung bewirkt. Die reiche Lösung wird hierbei in eine leichter siedende Komponente, den Arbeitsmitteldampf $d_1$ und die arme Lösung $a_1$ zerlegt. Der Arbeitsmitteldampf $d_1$ ist nach dem Austritt aus dem Austreiber $H_1$ überhitzt und wird zwecks Abbau der Überhitzung in den Dampfsättiger $C_1$ eingeführt, in dem ein Teil des Kondensats $k_3$ versprüht wird. Dabei verdampft ein Teil des Kondensats $k_3$

unter Aufnahme der Überhitzungswärme des Arbeitsmitteldampfes d1. Der gesättigte Arbeitsmitteldampf d2 verläßt den Dampfsättiger C1 und schlägt sich im Kondensator K1 an dessen horizontalen Rohrbündeln nieder. Da die Rohrbündel mit Kühlwasser w1 gekühlt werden, vermischt sich das Kondensat mit dem Teilstrom k2 aus dem Dampfsättiger C1, so daß sich ein Gesamtkondensatstrom k1 ergibt, der nach Druckerhöhung durch die Pumpe P1 in die Teilströme k3 und k 4 zerlegt wird. Zur Regulierung des Teilstroms k3 für den Dampfsättiger C1 ist das Ventil V1 vorgesehen. Demnach befinden sich der Kondensator K1 und der Austreiber H1 im sogenannten Niederdruckteil, da auch die vom Austreiber H1 abgeschiedene arme Lösung a1 erst mittels einer Pumpe P3 auf ein höheres Druckniveau gebracht werden muß.

Im Vorwärmer W1 erfolgt die Erwärmung des flüssigen Arbeitsmittels im Gegenstrom zur reichen Lösung r3. Das erwärmte Arbeitsmittel k5 tritt über das Ventil V2 in den Verdampfer H2 ein und sammelt sich dort in einem Sumpf. Im Sumpf ist eine genügende Menge des Arbeitsmittels gespeichert, so daß dieses durch die Umwälzpumpe P2 über das Ventil V3 auf die horizontalen Verdampferrohre versprüht wird, durch die, wie beim Austreiber, der Abfallwärmeträger f2 strömt und dabei Wärme abgibt. Hierdurch verdampft das Arbeitsmittel vollständig. Während ein Teil des flüssigen Arbeitsmittels k6 nach Entspannung durch das Ventil V4 in den Austreiber H1 zwecks Konzentrationsausgleich zurückgeführt wird, gelangt das verdampfte Arbeitsmittel d2 in den Dampfüberhitzer W3 und nimmt Wärme von der reichen Lösung r5 auf. So entsteht der überhitzte Dampf d3.

Auf der anderen Seite wird dem Austreiber H1 die arme Lösung a1 entzogen und nach Druckerhöhung durch die Pumpe P3 im Lösungswärmetauscher W2 im Gegenstrom zur reichen Lösung r4 erwärmt. Die erwärmte arme Lösung a2 wird auf horizontale Rohre des Absorbers A1 versprüht und vermischt sich dort mit dem ebenfalls eingeleiteten überhitzten Dampf d3. Hierdurch wird die sogenannte Absorptionswärme bei höherer Temperatur frei, die als Nutzwärme abgeführt wird, z.B. für die Dampferzeugung. Im vorliegenden Fall wird das Speisewasser s1 über das Regulierventil V6 in ein Umwälzsystem eingespeist und vermischt sich mit dem Umwälzwasser u1. Das Mischwasser u2 wird durch die Pumpe P4 über das Ventil V7 in die horizontalen Rohre des Absorbers A1 gefördert. Dieses verdampft teilweise durch Aufnahme der Absorptionswärme im Absorber A1. Das Wasser/Dampf-Gemisch u3 passiert dann den Dampfabscheider D1, aus dem der Nutzdampf n1 abgeführt wird.

Die durch Mischung des überhitzten Arbeitsmitteldampfes d3 mit der armen Lösung a2 entstehende reiche Lösung r5 kühlt sich demnach in folgenden Bauteilen in der angegebenen Reihenfolge ab: Zunächst im Dampfüberhitzer W3, dann im Lösungswärmetauscher W2 und schließlich im Vorwärmer W1 (vgl. Ströme r4, r3 und r2 in Fig. 1). Dadurch tritt die reiche Lösung r1 nach Entspannung im Ventil V5 in den Austreiber H1 ein, womit der Kreislauf geschlossen wird.

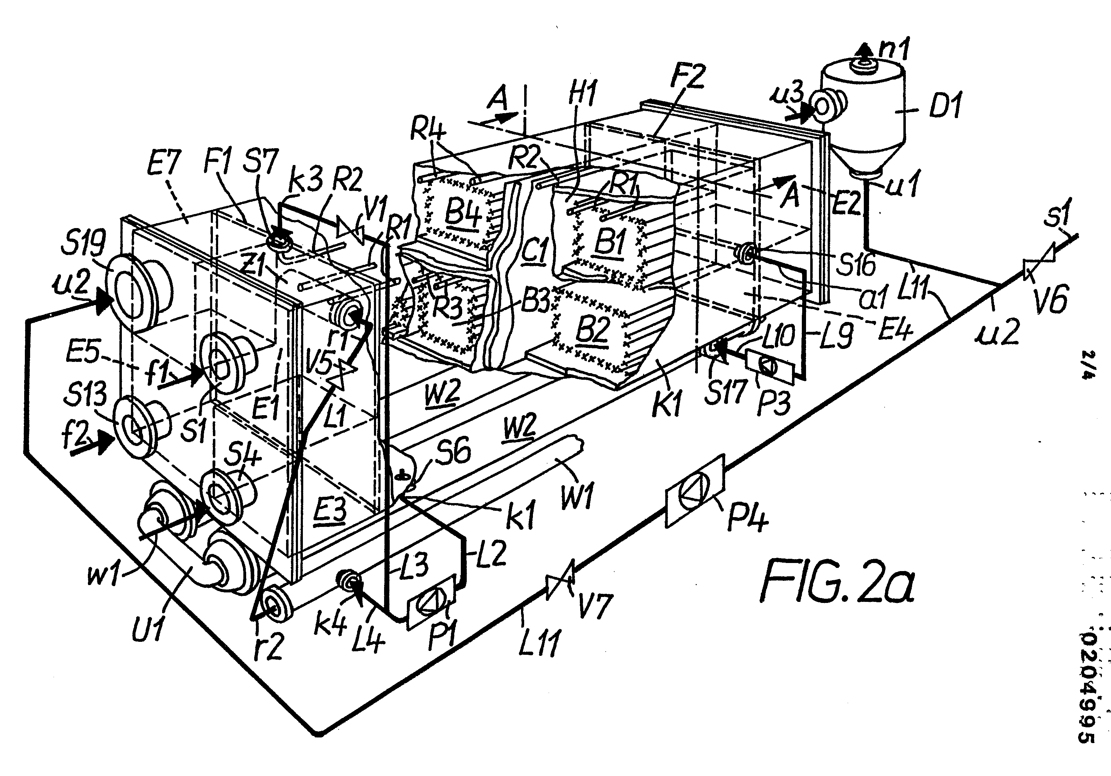

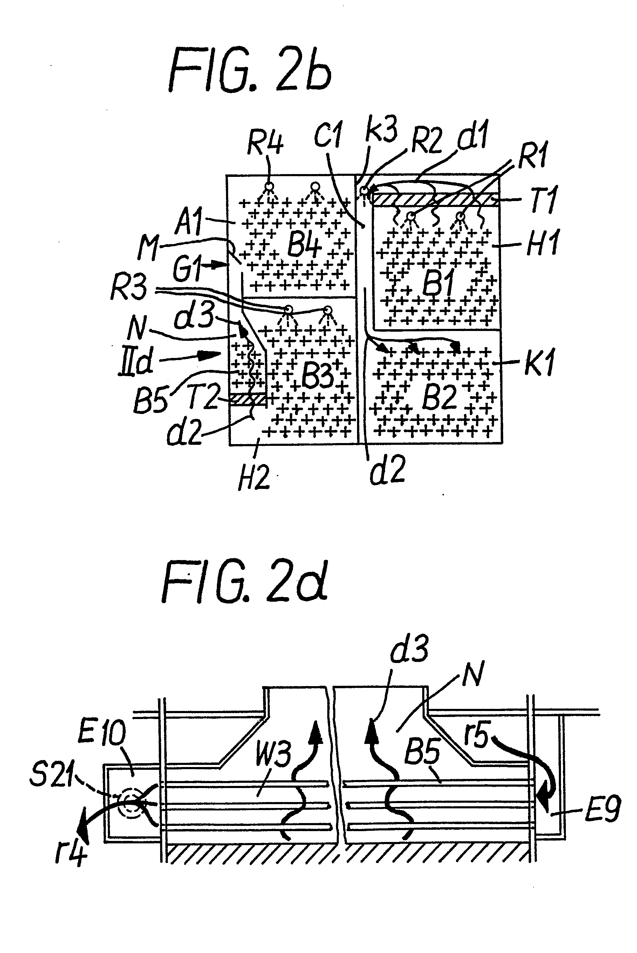

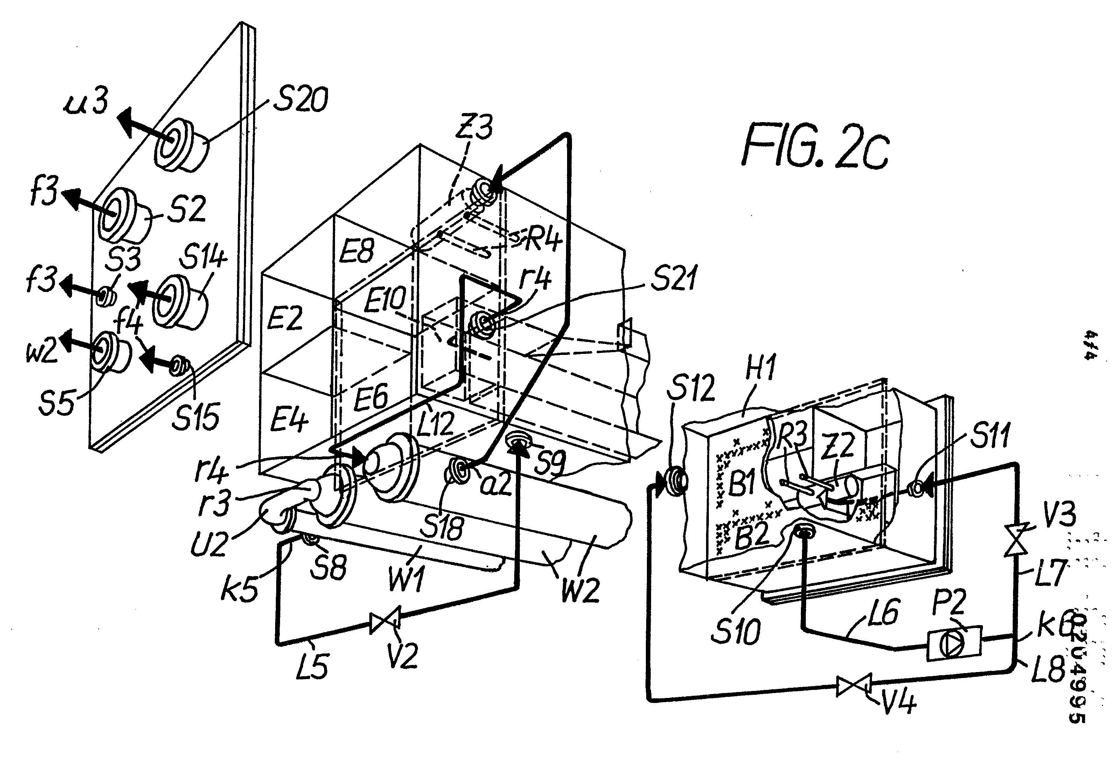

Fig. 2a bis d zeigen die Vorrichtung zur Durchführung des vorbeschriebenen Verfahrens in perspektivischer Darstellung. Hierbei stellt Fig. 2b eine Schnittansicht entlang der Linie A-A dar, wohingegen Fig. 2c und d rückwärtige bzw. seitliche schematische Teilansichten der Fig. 2a bzw. 2b zeigen.

Nach Fig. 2a wird die reiche Lösung r1 über die Leitung L1 in den Sammler Z1 des Austreibers H1 eingeführt und strömt von dort aus durch die Verteilerrohre R1, die in ihren unteren Bereichen Verteilerdüsen tragen, durch die die arme Lösung auf das horizontale Rohrbündel B1 des Austreibers H1 gleichmäßig verteilt wird. Durch die Rohre des Rohrbündels B1 strömt der Abfallwärmeträger f1, der über den Stutzen S1 in die Eintrittskammer E1 eingespeist wird. Nach Wärmeabgabe an die reiche Lösung wird der Abfallwärmeträger f3 über die Austrittskammer E2 durch den Stutzen S2 in gasförmigem Zustand und durch den Stutzen S3 in flüssigem Zustand abgeführt (vgl. Fig. 2c). Dieser Fall tritt auf, wenn es sich bei der Wärmeabgabe um eine Teilkondensation des Abfallwärmeträgers, der z.B. als Dampf/Luft-Gemisch vorliegt, handelt. Der erzeugte Arbeitsmitteldampf d1 passiert gemäß Fig. 2b den Flüssigkeitsabscheider T1 und gelangt dann in den Dampfsättiger C1, in dem das Kondensat k3 über das Verteilerrohr R2 eingespritzt wird. Nach Abbau der Überhitzung kondensiert der gesättigte Arbeitsmitteldampf im Kondensator K1 (Fig. 2a und b) am horizontal angeordneten Rohrbündel B2, durch das das über den Stutzen S4 und die Eintrittskammer E3 eingeführte Kühlwasser w1 strömt (Fig. 2a) und dieses nach Wärmeaufnahme über die Austrittskammer E4 und den Stutzen S5 verläßt (Kühlwasseraustritt w2, Fig. 2a). Unterhalb des Rohrbündels B2 vermischen sich das kondensierte Arbeitsmittel und der eingespritzte Teilstrom k3. Das Gemisch k1 fließt über den unten angebrachten Stutzen S6 und die Leitung L2 zur Pumpe P1 und teilt sich nach Druckerhöhung in zwei Teilströme auf (Fig. 2a). Der Teilstrom k3 wird über die Leitung L3, das Regulierventil V1 und den Stutzen S7 in das Verteilerrohr R2 des Dampfsättigers C1 eingespeist und zur Einspritzung benutzt (Fig. 2a), während der Rest k4 den Vorwärmer W1 durchströmt und nach Erwärmung diesen durch den Stutzen S8 verläßt (Fig. 2c). Das erwärmte Arbeitsmittel k5 gelangt dann über die Leitung L5, das Regulierventil V2 und den Stutzen S9 in den Sumpf des Verdampfers H2 (Fig. 2c).
Von dort aus wird nach Fig. 2c das flüssige Arbeitsmittel durch den Stutzen S10 über die Leitung L6 von
der Pumpe P2 angesaugt und durch die Leitung L7, das
Regulierventil V3 und den Stutzen S11 in den Sammler
Z2 des Verdampfers H2 gefördert. Das Arbeitsmittel durchströmt die Verteilerrohre R3 und wird mit Hilfe der
an diesen angebrachten Düsen auf das horizontal angeordnete Verdampferrohrbündel B3 verteilt (Fig. 2a bis c),
während der Teil k6 zwecks Konzentrationsausgleich
durch die Leitung L8 das Ventil V4 und den Stutzen S12
in den Austreiber H1 zurückfließt. Die Zufuhr des Abfallswärmeträgers f2 zum Verdampferrohrbündel B3 erfolgt nach Fig. 2a durch den Stutzen S13 über die Eintrittskammer E5, die über die obere rechte Ecke in
Fig. 2a mit der Eintrittskammer E1 des Austreibers H1
verbunden ist. Der Austritt des Abfallwärmeträgers geschieht ähnlich wie beim Austreiber H1 durch die Austrittskammer E6 und die Stutzen S14 und S15, jeweils
für den gasförmigen und kondensierten Abfallwärmeträger f4.
Der erzeugte Arbeitsmitteldampf d2 durchströmt gemäß
Fig. 2b zuerst den Tropfenabscheider T2, dann das Rohrbündel B5 des Dampfüberhitzers W3 im Kreuzstrom und
gelangt über die Schleuse G1 in den Rohrbündelraum des
Austreibers A1. Hier wird der überhitzte Arbeitsmitteldampf d3 (Fig. 2d) von der armen Lösung im Absorber absorbiert, wobei die Nutzwärme frei wird.
Die arme Lösung a1 strömt gemäß Fig. 2a aus dem Austreiber H1 durch den Stutzen S16 über die Leitung L9
zur Pumpe P3 und tritt nach Druckerhöhung durch die
Leitung L10 und den Stutzen S17 in den Lösungswärmetauscher W2 und erwärmt sich im Gegenstrom zur reichen
Lösung r4 (Fig. 2c). Der Lösungswärmetauscher kann,
wie in Fig. 2 angedeutet, aus mehreren Strängen bestehen. Gemäß Fig. 2c verläßt die arme Lösung a2 den
Lösungswärmetauscher W2 durch den Stutzen S18 und strömt dann zum Sammler Z3 des Absorbers A1 und wird über die Verteilerrohre R4 über Düsen auf das Rohrbündel B4 des Absorbers verteilt. Sie nimmt den überhitzten Dampf d3 (Fig. 2b) auf und gibt dabei die Nutzwärme an den durch das Rohrbündel R4 fließenden Wärmeträger ab. Als Nutzwärmeträger kann z.B. Speisewasser s1 verwendet werden, das über das Ventil V6 in die Umwälzleitung L11 eingegeben wird. Der Umwälzstrom u2 wird mit Hilfe der Umwälzpumpe P4 über das Ventil V7, den Stutzen S19 und die Eintrittskammer E7 durch das Rohrbündel B4 des Absorbers A1 gefördert und durch Aufnahme der Nutzwärme teilweise verdampft. Das Wasser/Dampf-Gemisch u3 gelangt durch die Austrittskammer E8 und den Stutzen S20 (Fig. 2c) zum Dampfabscheider D1. Dort erfolgt die Trennung des Nutzdampfes n1; das Umwälzwasser u1 wird in die Umwälzleitung zurückgeführt.

Nach der Aufnahme des Arbeitsmitteldampfes durch die arme Lösung a2 entsteht im Absorber die reiche Lösung r5, die gemäß Fig. 2d über die Eintrittskammer E9 des Überhitzers W3 das Überhitzerrohrbündel B5 durchströmt und nach Abkühlung dieses über die Eintrittskammer E10 und den Stutzen S21 verläßt. Danach strömt die reiche Lösung r4 durch die Leitung L12 zum Lösungswärmetauscher W2 (Fig. 2c) und erwärmt im Gegenstrom die arme Lösung a1. Im vorliegenden Ausführungsbeispiel besteht der Lösungswärmetauscher aus zwei Strängen, die durch die Umschlußleitung U1 miteinander verbunden sind (Fig. 2a). Ebenso ist der Vorwärmer W1 am Eintritt mit dem Austritt des Lösungswärmetauschers W2 durch die Umschlußleitung U2, die von der reichen Lösung r3 durchströmt wird, verbunden. Nach der Vorwärmung des Arbeitsmittels gelangt die reiche Lösung r2 in die Leitung L1, erfährt durch das Drosselventil V5 eine Entspannung und tritt dann in den Sammler Z1 des Austreibers H1 ein. Damit ist der Kreislauf geschlossen.

Die beschriebene Vorrichtung weist demnach insbesondere die Merkmale auf, daß die Rohrbündel B1 bis B5 der Hauptbestandteile (Austreiber, Kondensator, Verdampfer, Absorber und Dampfüberhitzer) zwei gemeinsame Rohrböden F1 und F2 besitzen und mit Ausnahme des Dampfüberhitzers W1 als horizontale Rieselapparate ausgeführt und mit ihren Ein- und Austrittskammern in einem einzigen Gehäuse, dessen übrigen Wände der Übersichtlichkeit halber in den Fig. 2a bis d weggelassen sind, untergebracht sind. Der Vorwärmer W1, der Lösungswärmetauscher W2 sowie andere Aggregate wie Pumpen P1 bis P4 sind unterhalb dieses Gehäuses angeordnet.

Die Vorrichtung arbeitet vorzugsweise mit dem Arbeitsgemisch Trifluorethanol/Tetraethylenglykoldimethyläther. Mit diesem Gemisch kann bei einer Abfallwärmetemperatur von ca. 100 $^{\circ}$C (z.B. Brüden) eine Nutztemperatur von 150 $^{\circ}$C erreicht werden, wobei das Verhältnis der Nutzwärme zur eingesetzten Abfallwärme 37 % beträgt.

P a t e n t a n s p r ü c h e

1. Verfahren zur Umwandlung von Niedertemperaturwärme in nutzbare Wärme, wobei in einem geschlossenen Kreislauf unter Verwendung eines Verdampfers und eines Absorbers in einem Hochdruckteil und eines Austreibers und Kondensators im Niederdruckteil im Absorber verwertbare Energie freigesetzt wird und die vom Absorber kommende reiche Lösung vor deren Entspannung zur Erwärmung von der vom Austreiber kommenden armen Lösung verwendet wird, dadurch gekennzeichnet, daß in einem geschlossenen Kreislauf die aus einem Absorber (A1) kommende reiche Lösung (r5) zuerst den aus einem Verdampfer (H2) stammenden Arbeitsmitteldampf (d2) erhitzt und anschließend eine einem Austreiber (H1) entzogene arme Lösung (a1) erwärmt und schließlich das aus einem Kondensator (K1) abgeführte Arbeitsmittelkondensat (d2) erwärmt, bevor dies dem Verdampfer (H2) zugeleitet wird, und daß der überhitzte, aus dem Verdampfer (H2) stammende Arbeitsmitteldampf (d3) und die erwärmte arme Lösung (a2) dem Absorber (A1) zugeführt werden, wo durch Absorption Nutzwärme frei wird.

2. Verfahren nach Anspruch 1, gekennzeichnet durch eine Rückführung des flüssigen Arbeitsmittels (k6) vom Verdampfer (H2) zum Austreiber (H1).

3. Verfahren nach einem der Ansprüche 1 oder 2, dadurch gekennzeichnet, daß der im Austreiber (H1) erzeugte, überhitzte Arbeitsmitteldampf (d1) über einen Dampfsättiger (C1) dem Kondensator (K1) zugeführt wird.

4. Verfahren nach Anspruch 3, dadurch gekennzeichnet, daß ein Teil des von dem Kondensator (K1) abgezogenen Kondensats (k3) in dem Dampfsättiger (C1) versprüht wird, wodurch dieses unter Aufnahme der Überhitzungswärme teilweise verdampft.

5. Verfahren nach einem der Ansprüche 1 bis 4, dadurch gekennzeichnet, daß als Arbeitsmittel ein Gemisch aus Trifluorethanol und Tetraethylenglykoldimethyläther verwendet wird.

6. Vorrichtung zur Durchführung des Verfahrens nach Ansprüchen 1 bis 5, bei dem in einem geschlossenen Kreislauf ein Austreiber, ein Kondensator, ein Verdampfer und ein Absorber mit entsprechenden Pumpen und Drosselventilen sowie zwischen Absorber und Austreiber ein im Gegenstrom arbeitender Wärmetauscher geschaltet sind, dadurch gekennzeichnet, daß in einem geschlossenen Kreislauf ein Absorber (A1) durch eine dessen reiche Lösung führende Rohrverbindung mit einem Dampfüberhitzer (W3), einem Lösungswärmetauscher (W2), einem Vorwärmer (W1) und einem Austreiber (H1) in Reihe geschaltet und über den Lösungswärmetauscher (W2), der die arme Lösung zum Absorber (A1) zurückführt, verbunden ist, daß der Austreiber (H1) über einen Kondensator (K1), den Vorwärmer (W1), einen Verdampfer (H2) und den Dampfüberhitzer (W3) zur Führung des Arbeitsmittels bzw. Arbeitsmitteldampfes (d2, d3) mit dem Absorber (A1) verbunden ist und daß zwischen dem Verdampfer (H2) und dem Austreiber (H1) eine Rückführung besteht.

7. Vorrichtung nach Anspruch 6, dadurch gekennzeichnet, daß der Absorber (A1), der Austreiber (H1), der Verdampfer (H2), der Kondensator (K1) und der Dampfüberhitzer (W3) horizontale Verteilerrohre (R1, R3, R4) und/oder zu Bündeln (B 1, B2, B3, B4, B5) zusammengefaßte horizontale Rohranordnungen besitzen.

8. Vorrichtung nach einem der Ansprüche 6 oder 7, dadurch gekennzeichnet, daß die Rohranordnungen des Absorbers (A1), des Austreibers (H1), des Verdampfers (H2), des Kondensators (K1) und des Dampfüberhitzers (W3) eine gemeinsame Rohrhalterung bzw. ein oder zwei gemeinsame Rohrböden (F1, F2) in einem einzigen Gehäuse besitzen.

9. Vorrichtung nach einem der Ansprüche 6 bis 8, dadurch gekennzeichnet, daß der Absorber (A1), der Austreiber (H1) und der Verdampfer (H2) horizontal angeordnete Rieselapparate, vorzugsweise in Form von sich über ein oder mehrere Verteilerrohre (R1, R3, R4) erstreckende Verteilerdüsen besitzen, die oberhalb der jeweiligen Abfallwärmeträger bzw. Nutzwärmeträger führenden Rohrbündel (B1, B3, B4) angeordnet sind.

10. Vorrichtung nach Anspruch 6, dadurch gekennzeichnet, daß zwischen dem Austreiber (H1) und dem Kondensator (K1) ein Dampfsättiger (C1) zwecks Abbau der Überhitzung des aus dem Austreiber (H1) austretenden Arbeitsmitteldampfes geschaltet ist.

11. Vorrichtung nach Anspruch 10, dadurch gekennzeichnet, daß über ein oder mehrere Verteilerrohre (R2) bzw. über an dessen Unterseite angeordnete Verteilerdüsen Arbeitsmittelkondensat einspritzbar ist.

12. Vorrichtung nach Anspruch 6, dadurch gekennzeichnet, daß der Vorwärmer (W1) und der Lösungswärmetauscher (W2) im Gegenstromprinzip arbeiten.

13. Vorrichtung nach einem der Ansprüche 6 bis 12, dadurch gekennzeichnet, daß jeweils einzeln als auch in der Gesamtanordnung in einem im wesentlichen quaderförmigen Aufbau ein Austreiber (H1), vorzugsweise mit einem an dessen Oberseite horizontal angeordneten Flüssigkeitsabscheider (T1), über den bzw. durch den der Arbeitsmitteldampf (d1) eine seitlich von dem Austreiber (H1) gelegene Rohrleitung (R2) mit düsenförmigen Öffnungen an ihre Unterseite passierend, in einen als Dampfsättiger (C1) dienenden darunterliegenden kanalförmigen Raum mit vorzugsweise rechteckigem Querschnitt eintreten kann, ein an dem unteren Ende des Dampfsättigers (C1) und unterhalb des Austreibers (H1) angeordneter Kondensator (K1) sowie ein daran seitlich angrenzend gelegener Verdampfer (H2), die miteinander über einen vorzugsweise rohrförmigen Vorwärmer (W1) verbunden sind und wobei das Arbeitsmittel (k5) über ein oder mehrere Verteilerrohre (R3) bzw. an deren Unterseite befindliche Düsen Abfallwärmeträger führende Rohrbündel (B3) berieseln kann, und ein oberhalb des Verdampfers (H2) gelegener Absorber (A1) vorgesehen sind, wobei das Arbeitsmittel (d2, d3) vorzugsweise über einen Tropfenabscheider (T2) sowie einen ebenfalls seitlich von dem Verdampfer (H2) angeordneten seitlichen Kanal, den Dampferhitzer (W3) ggf. mit einer sich daran anschließenden Schleuse (G1) in den Absorber (A1) gelangen kann.

14. Vorrichtung nach einem der Ansprüche 6 bis 13, dadurch gekennzeichnet, daß jedem Rohrbündel (B1 bis B5) jeweils eine Eintritts- bzw. Austrittskammer (E1 bis E8) vor- bzw. nachgeschaltet ist, die sich zusammen mit dem Austreiber (H1), dem Kondensator (K1) dem Verdampfer (H2), dem Absorber (A1) und dem Dampfüberhitzer (W3) in einem quaderförmigen Gehäuse befinden.

2

15. Vorrichtung nach Anspruch 13, dadurch gekennzeichnet, daß die Schleuse (G1) aus einer Kanalverjüngung
(N) mit einem oberhalb des Schleusenausgangs versehenen Abdeckblech (M) besteht.

16. Vorrichtung nach einem der Ansprüche 7, 9, 11, 13,
dadurch gekennzeichnet, daß den Verteilerrohren (R1
bis R3) Sammler (Z1 bis Z3) vorgeschaltet sind, die
vorzugsweise aus einem zylindrichen Gehäuse bestehen.

FIG.1

FIG.2a

S19  u2  E5  f1  S13  f2  S4  w1  U1  r2  k4  L4  P1  E7  F1  S7  k3  R2  V1  R1  Z1  L1  V5  S1  E1  E3  S6  k1  L3  L2  V7  L11  W2  W2  W1  R4  R2  R1  B4  C1  B1  R3  B3  B2  A  H1  F2  A  u3  n1  D1  E2  u1  S16  a1  L11  E4  u2  V6  s1  L10  L9  S17  P3  K1  P4

2/4

0204995

# FIG. 2b

# FIG. 2d

FIG. 2c